# EUROPEAN PATENT SPECIFICATION

(11) **EP 3 133 913 B1**
(45) Date of publication and mention of the grant of the patent: **26.02.2020**
(21) Application number: 15732937.6
(22) Date of filing: 24.04.2015
(51) Int. Cl.: A01G 17/08

(54) **APPARATUS AND CORRESPONDING OPERATIVE METHOD TO AUTOMATICALLY BIND AT LEAST TWO ELEMENTS TO EACH OTHER**
VORRICHTUNG UND ENTSPRECHENDES BETRIEBSVERFAHREN ZUM AUTOMATISCHEN VERBINDEN WENIGSTENS ZWEIER ELEMENTE MITEINANDER
APPAREIL ET MÉTHODE OPÉRATIONNELLE CORRESPONDANTE POUR LIER AUTOMATIQUEMENT ENSEMBLE AU MOINS DEUX ÉLÉMENTS

(30) Priority: 24.04.2014 IT UD20140073
(43) Date of publication of application: 01.03.2017
(73) Proprietor: Cruzzolin, Andrea, 31046 Oderzo (IT)
(72) Inventor: CRUZZOLIN, Andrea, 31046 Oderzo (IT); BERTOLI, Luciano, 33080 Fiume Veneto (IT)
(74) Representative: Petraz, Gilberto Luigi
(86) International application number: PCT/IB2015/053004
(87) International publication number: WO 2015/162595

(56) References cited:
- EP-A1- 2 191 713
- FR-A1- 2 830 408
- FR-A6- 2 124 018
- US-A- 4 558 894
- US-A1- 2013 125 461

## Description

### FIELD OF THE INVENTION

The present invention concerns an apparatus and corresponding operating method to automatically bind at least two elements to each other, for example, but not only, a vine-shoot to a support pole.

The apparatus and the method according to the invention can also be used in the cabling sector, for example electric cables, or in the packaging sector, and in all those sectors where it is necessary to bind at least two elements with respect to each other.

The apparatus is provided with electric motorization and some mechanisms that allow to carry out in sequence all the steps of the method to obtain a binding around the two or more elements to be bound to each other. In one form of embodiment the size and weight of the apparatus allow an adult person to hold it in their hand and to actuate a command button, even with the same hand, so that the apparatus becomes the portable type.

### BACKGROUND OF THE INVENTION

A portable apparatus is known, from US-A-4.558.894, to automatically bind together two or more electric cables, obtaining a tie around them, cutting it to size by a long flexible wire. This known apparatus comprises a body that has the shape of a pistol, with a lower handle and an actuation button shaped like a trigger. The front end of the body is C-shaped and has two fixed arms that define a semi-circular cavity open toward the outside, in which the cables to be bound together are suitable to be disposed. An annular closing element, also C-shaped, is mounted on the two fixed arms and can rotate coaxially with respect to them. The annular closing element is actuated by a toothed pinion and the binding wire is commanded by a first pneumatic cylinder, to obtain a tie around the elements to be bound, disposed in the semi-circular cavity. A second pneumatic cylinder is actuated to command a knife so that it cuts the flexible wire, after the tie has been obtained around the elements to be bound.

The known apparatus has the disadvantage that it is very complex, heavy and costly, and can only be used in association with a source of compressed air, for example a compressor, to command the two pneumatic pistons mounted on the pistol-shaped body.

Portable apparatuses are also known from documents FR-A-2.830.408, EP-A-2.191.713, US-A-2013/125461 and FR-A-2.124.018, to automatically bind together two or more objects.

These portable apparatuses are each provided with a first arm, fixed, and a second arm that is moved closer to/away from the first arm.

A binding element, for example a wire, is fed toward the first arm of the portable apparatus.

The second arm is provided with a clamping or holding device, suitable to take and hold the wire supplied by the first arm, when the latter is brought close to the second arm.

These solutions are particularly complex, however, and require a direct intervention by the operator to perform the binding operations. These known apparatuses cause tiredness for the operators using them, since with every binding operation they have to intervene directly on the apparatus to ensure a correct execution of the binding on the elements.

Furthermore, given that the operator has to intervene directly on the binding apparatus, an appropriate training is required for the staff before they can use the apparatus, to teach them how to use it, how to make the binding on the elements, for example between a tree or a branch and a support.

One purpose of the present invention is to obtain an apparatus to automatically bind at least two elements to each other, for example but not only, a vine-shoot to a support pole, which is simple, reliable and inexpensive.

Another purpose of the present invention is to obtain an apparatus to automatically bind at least two elements to each other that is light and portable, to be used in isolated places, without needing to have fixed energy sources available.

Another purpose of the present invention is to obtain an apparatus of the above type that allows a user to use it easily, even with only one hand.

Another purpose of the present invention is to obtain an apparatus to bind at least two elements to each other that does not require to use highly qualified staff.

Another purpose of the present invention is to obtain a binding apparatus that does not require any direct intervention by the operators on the binding operations, that is, on the binding element. This also prevents the users from suffering accidents, grazes, or incidents.

Another purpose of the present invention is to perfect an operating method to automatically bind at least two elements to each other which is simple, functional and reliable.

The Applicant has devised, tested and embodied the present invention to overcome the shortcomings of the state of the art and to obtain these and other purposes and advantages.

### SUMMARY OF THE INVENTION

The present invention is set forth and characterized in the independent claims 1 and 5, while the dependent claims describe other characteristics of the invention or variants to the main inventive idea.

In accordance with the above purposes, an apparatus to automatically bind at least two elements to each other comprises a first arm in which a binding element is disposed, for example of the filiform type, and a second arm connected to the first arm so that at least one of the two arms is reciprocally mobile with respect to the other between an inactive position, in which two ends of the arms are distant from each other, and at least one operating position in which the two ends are in contact with, or near, each other.

In accordance with one aspect of the present invention there is a feed device on the first arm configured to make the binding element selectively advance at least as far as the end of the first arm, while there is a clamping device on the second arm configured to temporarily and selectively clamp the binding element at least when the two arms are in the first operating position.

With this aspect, the apparatus according to the present invention has the advantage of being simple, functional and very reliable.

In accordance with another aspect of the present invention, the first arm is laterally provided with a niche with a substantially semi-circular shape and the second arm has an arched shape to define, together with the niche, a cavity configured to temporarily receive the two elements to be bound to each other.

According to the present invention the apparatus comprises an arm electric motor to selectively command the movement of at least one of the two arms from the inactive position to the operating position.

The apparatus also comprises a feed electric motor configured to command the actuation of the feed device so as to determine the feed of the binding element.

In accordance with another characteristic of the present invention, a method to automatically bind at least two elements to each other, using an apparatus as above disclosed, that comprises a first arm in which a binding element is disposed and a second arm, and wherein at least one of the two arms is mobile with respect to the other between an inactive position, in which two ends of the arms are distant from each other, and at least one operating position in which the two ends of the arms are in contact with, or near, each other. The method comprises a step in which a feed device mounted on the first arm is driven to make the binding element selectively advance at least as far as the end of the first arm, and another step in which a clamping device is driven to temporarily and selectively clamp the binding element at least when the two arms are in the operating position.

### BRIEF DESCRIPTION OF THE DRAWINGS

These and other characteristics of the present invention will become apparent from the following description of one form of embodiment, given as a non-restrictive example with reference to the attached drawings wherein:
- fig. 1 is a view from below of an apparatus according to the present invention, in a non-operating, or inactive position;
- fig. 2 is a view from below of the apparatus in fig. 1, in a first operating position;
- fig. 3 is a perspective view, taken from above and from the front side of the apparatus in fig. 1, in a second operating position, which substantially coincides with the inactive position;
- fig. 4 is a perspective view, taken from below and from the rear side of the apparatus in fig. 3, in the second operating position;
- fig. 5 is a perspective and partial view, taken from below and from the front side of the apparatus in fig. 1;

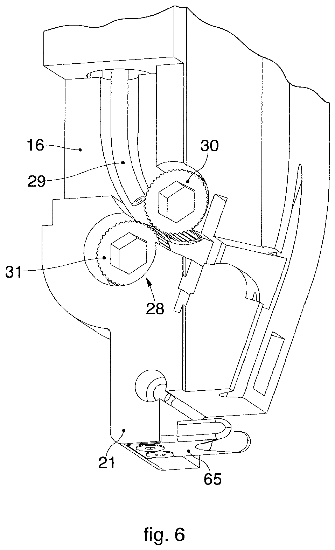

- fig. 6 is an enlarged and partial perspective view of a front part taken from above of the apparatus in fig. 2 in the inactive position;
- fig. 7 is a view from above of some enlarged details of the apparatus of fig. 2 in the first operating position,
- fig. 8 is a view from above of a detail of the apparatus in fig. 7 in the second operating position,
- fig. 9 is a perspective view, taken from the front side, of a detail of the apparatus of fig. 1 in a third operating position;
- fig. 10 is a perspective view of the detail of fig. 9 in a fourth operating position;
- figs. 11-18 schematically show the different steps of the operating method of the apparatus in figs. 1-10, starting from the inactive position;
- figs. 19 and 20 show possible variants of the apparatus shown in figs. 3 and 4;
- fig. 21 is an enlarged view of a component of fig. 20;
- figs. 22-24 are orthogonal views of a staple usable with the component in fig. 20;
- figs. 25-28 are schematic views of the component in fig. 21 in different operating conditions.

It should be noted that in the following description the terms front, rear, lower, above and below have the function solely of better illustrating the present invention, and must in no way be used to limit the scope or use thereof.

### DETAILED DESCRIPTION OF SOME FORMS OF EMBODIMENT

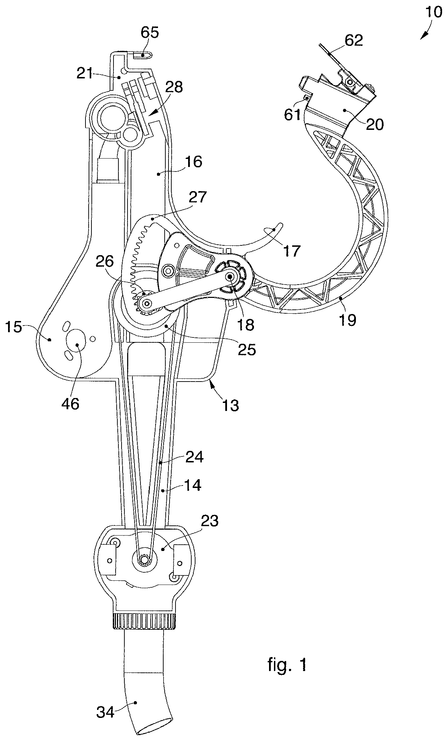

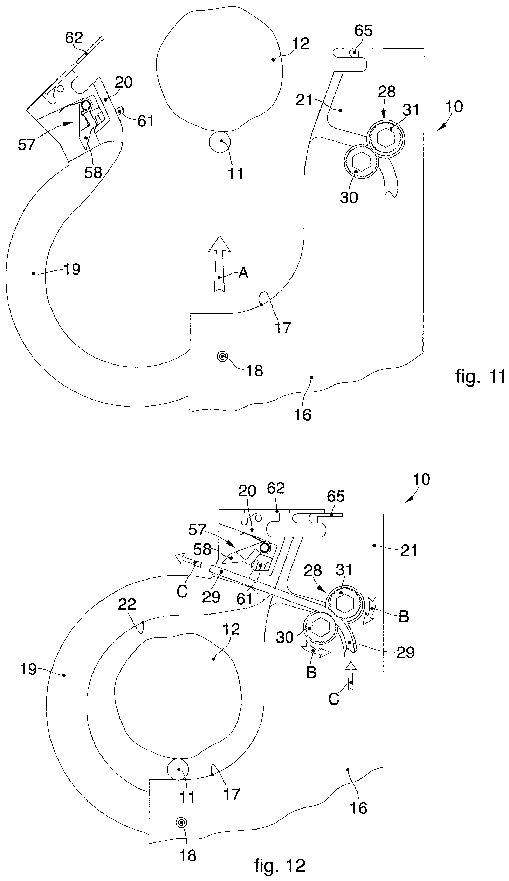

With reference to fig. 1 an apparatus 10 according to the present invention is configured to automatically two elements bind to each other, in particular, but not only, a vine-shoot 11 to a support pole 12, shown schematically sectioned in figs. 11 to 18.

The apparatus 10 has a size and weight such that it can be held in one hand and to be activated with the fingers of that hand, as will be described in detail hereafter, so that it is a portable type. For example, the length of the apparatus 10 is about 360mm and its weight is about 1,000 grams.

The apparatus 10 (fig. 1) comprises a body 13 of an oblong shape, which in turn comprises a handle 14 and a front part 15.

The front part 15 is shaped so as to have a first arm 16 on one side of which (to the right in fig. 1) there is an arched niche 17, substantially semi-circular in shape.

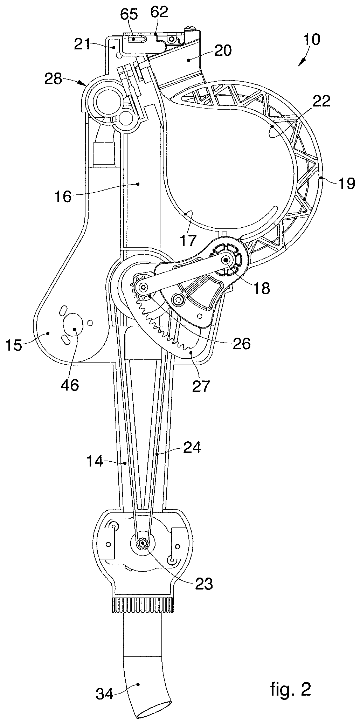

In a pin 18 supported by the body 13 a second arched arm 19 is pivoted, with a claw shape, which is mobile between an inactive position or condition, shown in fig. 1, and a first operating position, shown in fig. 2.

The second arm 19 has one end 20 (fig. 1) that in the inactive position is distant (about 80 mm for example) from a corresponding end 21 of the first arm 16.

Instead, when the second arm 19 is in its first operating position (fig. 2), it has its end 20 in contact with the end 21 and forms, with the niche 17, a substantially cylindrical cavity 22, inside which the elements 12 and 13 (fig. 12) to be bound to each other are suitable to be temporarily contained.

The movement of the second arm 19 with respect to its pin 18 between the inactive position and its first operating position and vice versa is commanded by an arm electric motor, indicated hereafter as first electric motor 23 (fig. 1), of the step type for example, mounted on the body 13 in the rear part of the handle 14.

A toothed pinion of the first electric motor 23 is connected by means of a toothed belt 24 to a toothed pulley 25 mounted rotatable on the body 13 and on which a toothed pinion 26 is mounted coaxially, which engages with a toothed sector 27 solid with the second arm 19.

At the end 21 of the first arm 16 a feed mechanism 28 is mounted, configured to selectively feed a binding element 29, of the filiform type, or wire, toward the end 20 of the first arm 16, to bind the two elements 11 and 12 to each other, as will be described in detail hereafter.

The wire 29 consists for example of a tube of resistant plastic material such as polyvinyl chloride (PVC), and has an external diameter of about 1 to about 6 mm.

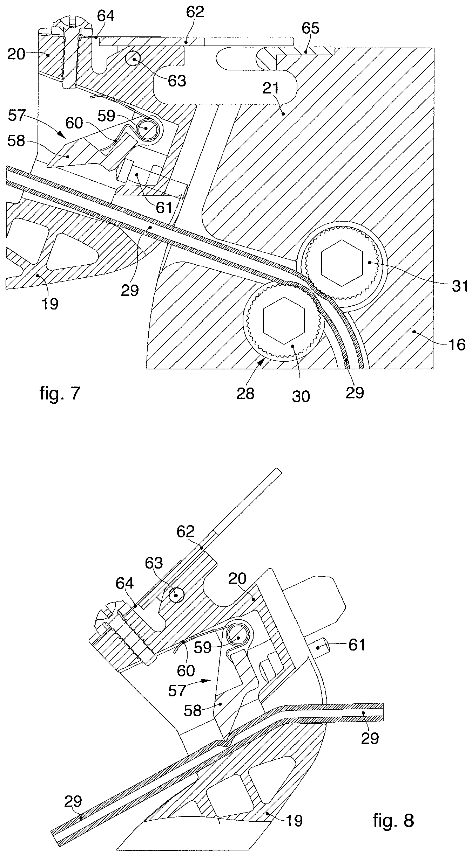

The feed mechanism 28 comprises a pair of toothed rolls 30 and 31, one drive and the other driven, disposed one alongside the other, at an adjustable distance, between which the wire 29 is interposed with slight interference (fig. 7).

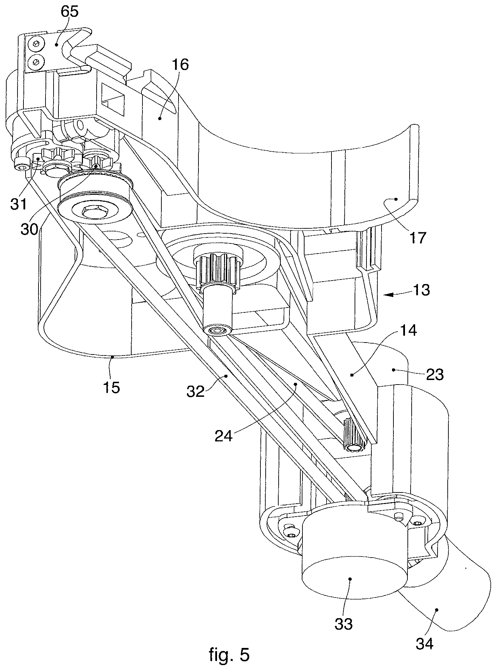

The toothed roll 30 is connected by means of a toothed belt 32 to an arm electric motor, indicated hereafter as second electric motor 33, of the step type for example, also mounted on the body 13, in the rear part of the handle 14 and on the opposite side with respect to the first electric motor 23 (fig. 5).

The wire 29, which can be as long as desired, even many meters in length, comes from a tank, not shown in the drawings, that can be supported by the user of the apparatus 10. The wire 29 reaches the feed device 28 through a pipe 34 disposed in the rear part of the handle 14.

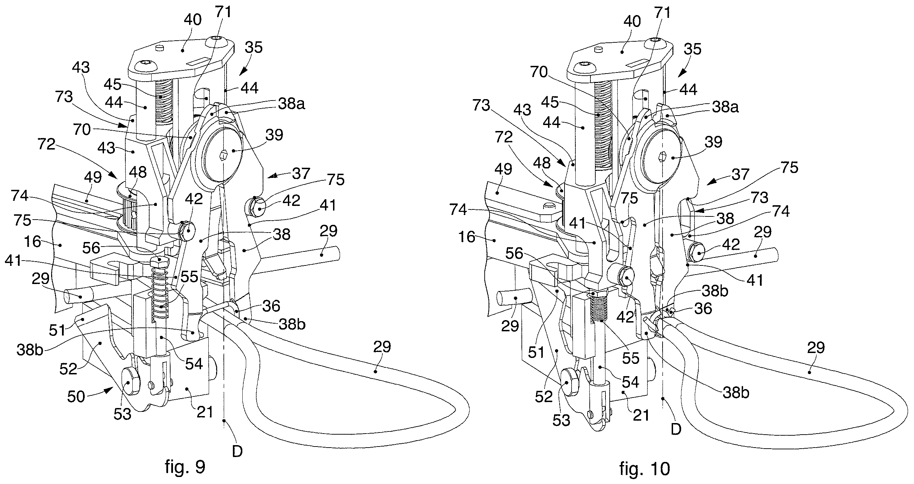

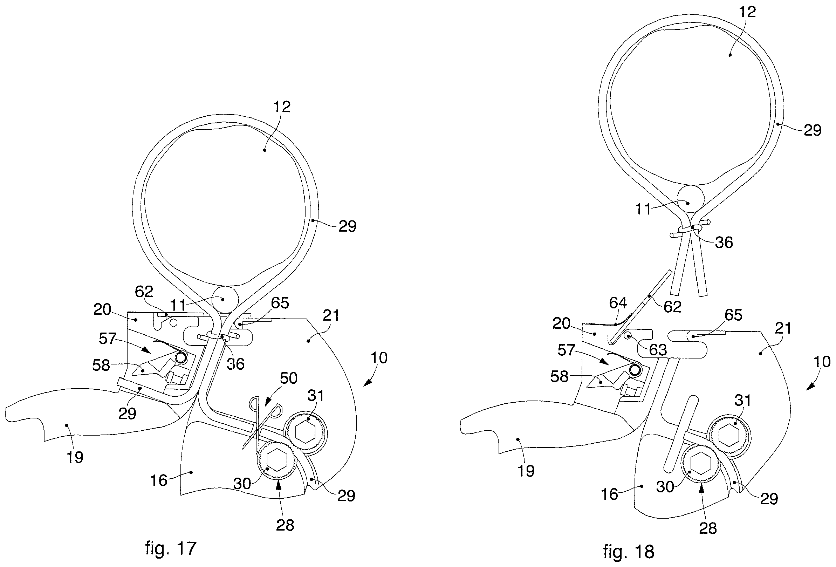

On the end 21 of the first arm 16 a stapling device 35 is mounted, configured to affix a closing staple 36 (figs. 9 and 10) around the wire 29 after a ring has been formed with it around the two elements 11 and 12 (figs. 17 and 18) to be joined to each other.

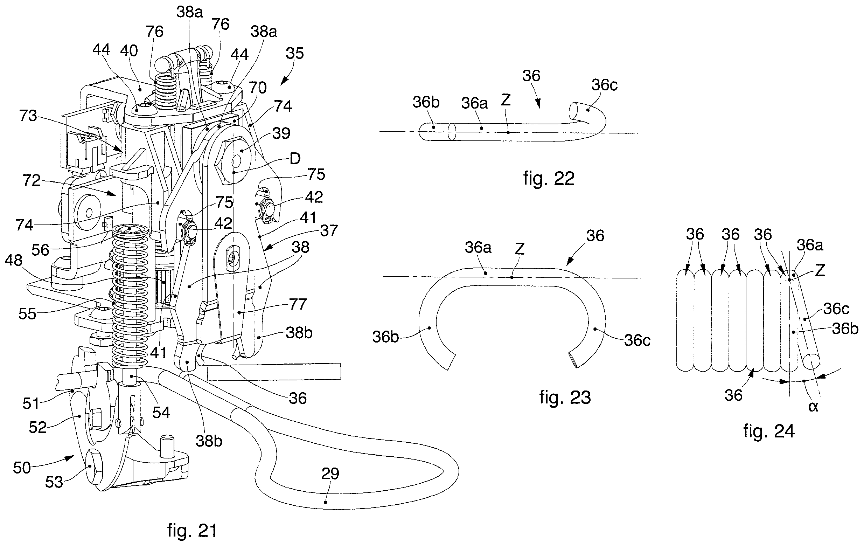

We shall now describe a possible stapling device 35 installable on the first arm 16 with reference to figs. 9 and 10, and to figs. 21-28.

The stapling device 35 (figs. 9, 10 and 21) comprises pincers 37 formed by two jaws 38 pivoted on a pin 39 and selectively movable reciprocally closer to/away from each other to determine the grip and subsequent closing of a staple 36.

In accordance with the form of embodiment shown in figs. 9, 10 and 21 the jaws 38 each comprise a pivoting end 38a and a gripping end 38b. The pivoting ends 38a are both pivoted in said pin 39, while the gripping ends 38b are able to be moved reciprocally closer to/away from each other in order to allow the gripping and the subsequent closing of the staple 36 on a wire 29.

The gripping ends 38b can be suitably shaped to at least partly house a portion of the staple 36.

The pin 39 is installed, as described hereafter, on a turret 40 disposed in a fixed position, in this specific case fixed to the end 21 of the first arm 16 and perpendicular thereto.

In accordance with the form of embodiment shown in figs. 9, 10 and 21 the pin 39 is installed fixed on a slider 70. In turn, the slider 70 is installed sliding in a transverse direction D, in this case orthogonal, to the axis of the pin 39, on the turret 40. Direction D also develops substantially parallel to the oblong development of the jaws 38.

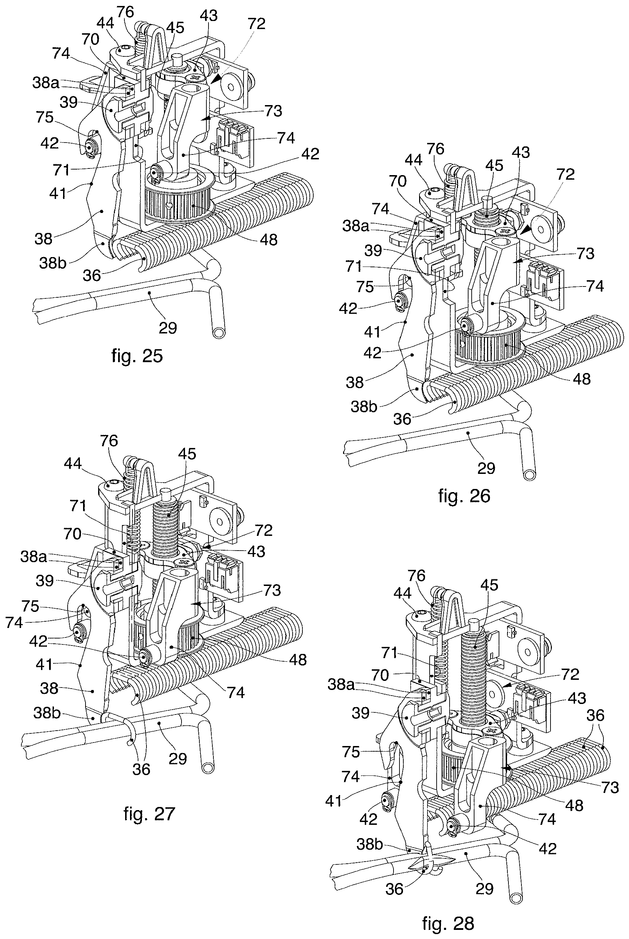

According to this form of embodiment, the slider 70 is suitable to assume at least a reception position shown in fig. 25, in which the jaws 38 are configured to receive a staple 36, and a closed position, in which the jaws 38 are translated with respect to the reception position, in this case downward, along said direction D and are suitable to determine the closing of the staple 36 around the binding element, or wire 29.

In accordance with a possible solution, the turret 40 is provided with at least a guide 71 configured to guide the movement of the slider 70 in said direction D.

The guide 71 can be provided with end-of-travel elements to determine said reception position and delivery position.

An actuation member 72 is associated to the two jaws 37, configured both to translate the slider 70 in said direction D and define said reception position and closed position, and also to determine the actuation of the jaws 38 or to determine the closing of the staple 36.

In accordance with the form of embodiment shown in figs. 9, 10 and 21, the actuation member 72 can comprise a stapler electric motor, in this case a third electric motor 46 (figs. 1-4) kinematically connected to the slider 70 and to the two jaws 38.

In accordance with the solution shown in figs. 9, 10 and 21, the actuation member 72 can comprise a worm screw 45 disposed substantially parallel to said direction D connected to the third electric motor 46 which is configured to make the worm screw 45 selectively rotate.

The actuation member 72 also comprises a drive element 73 screwed on the worm screw 45 and selectively translatable in said direction D.

In particular, the drive element 73 is configured to drive the two jaws 38 and selectively take them from the reception position to the closed position and, from their open position to their closed position.

In accordance with the form of embodiment shown in figs. 9, 10 and 21, the drive element 73 is configured to maintain said jaws 38 in their open condition at least when they are in their reception position, and to take them into their closed condition once they reach said closed position.

The drive element 73 can comprise two actuation arms 74, each possibly provided with a peg 42, which are each configured to contact one of the two jaws 38.

According to a possible solution, the two actuation arms 74, or at least one of the two, can be associated to guides 44 suitable to allow a guided translation of the drive element 73 in the direction D, due to the action of the worm screw 45.

The actuation arms 74 can be attached, in turn, solid to a slide 43 screwed on the worm screw 45.

Each jaw 38 is provided with a drive profile 41 configured to cooperate with the drive element 73 and determine the movements of the slider 70 and the jaws 38.

According to the forms of embodiment shown in figs. 9, 10, 21, 25-28, the actuation arms 74 and possibly the pegs 42 associated to them, act on the drive profiles 41.

In accordance with the solution shown in figs. 9, 10, 21, 25-28 the drive profiles 41 of the jaws 38 are defined by their lateral edges and are inclined with respect to the direction D, converging toward the pin 39.

In particular, the drive profiles 41 each define an inclined plane with which one of the two actuation arms 74 or one of the two pegs 42 is suitable to cooperate.

The drive profiles 41 can also be provided, toward the top or toward the end facing toward the pin 39, with an abutment portion 75, disposed transversely to the direction D and against which the actuation arms 74 are positioned in abutment, possibly with their pegs 42.

The abutment portion 75 is configured to allow the jaws 38 to open when they are translated from their closed position to their reception position.

Due to the action of the drive element 73, the abutment portions 75 are configured to keep the jaws 38 in an open condition at least in their reception position in which they have to receive a staple 36.

When the jaws 38 are in their reception position, a staple 36 can be fed to the jaws 38, which are kept open by the effect of the actuation arms 74.

Subsequently, with the third electric motor 46, the rotation of the worm screw 45 is commanded, which determines the simultaneous translation of the slider 70 along the turret 40 in the direction D.

During this translation, and until the jaws 38 reach their closed position, the drive element 73 acts on the jaws 38 trying to close them against each other to ensure the secure grip of the staple 36.

When the slider 70 reaches an end-of-travel condition along the guide 71, the movement of the latter is blocked by the end-of-travel of the guide 71. In this condition, the drive element 73 continues its translation in the direction D and exerts a pressure on the drive profiles 41 of the jaws 38 so as to close the jaws 38 one against the other and deform the staple 36 contained between them. This movement is obtained thanks to the inclined development of the drive profiles 41.

Once the complete closure of the jaws 38 has been achieved, that is, of the staple 36, the third electric motor 46 inverts the direction of rotation allowing the translation of the drive element 73 in an opposite direction to the previous movement, in order to take the jaws 38 from the closed position to the reception position.

During this translation, the drive element 73 determines the opening of the jaws 38.

The drive of the third electric motor 46 can be controlled by means of sensors installed for example on the turret 40 and configured to detect when the slider 70 reaches the two limit positions, that is, the reception position and the delivery position of the jaws 38. Depending on this data, the drive of the stapling device 35 is automatically coordinated.

According to a possible solution, shown in figs. 21, 25-28, the slider 70 is associated to elastic return elements 76 configured to return the slider 70 to a raised position, that is, the reception position of the jaws 38.

The elastic return elements 76 are also configured to slightly oppose the translation toward the closed position of the jaws 38, thus allowing to ensure the reciprocal contact of the drive profiles 41 against the actuation arms 74, or the pegs 42.

In accordance with another form of embodiment of the invention, shown for example in figs. 9, 10, 21, 25-28, the worm screw 45 is keyed on a toothed pulley 48 which is kinematically connected to the third electric motor 46.

The toothed pulley 48, in the case shown here, is connected to the third electric motor 46 by means of a toothed belt 47 wound around a toothed pinion of the third electric motor 46.

The stapling device 35 also comprises a loader 49 (fig. 9) of the known type, configured to contain a plurality of staples 36 and thrust them toward the jaws 38 of the pincers 37.

The staples 36 can be supplied packed one on the other and held together for example by an adhesive tape or a glue.

In accordance with a possible form of embodiment, a possible example of staple 36 is shown in figs. 22, 23 and 24.

In particular, the staple 36 is provided with a rectilinear segment 36a, and two curved segments, that is, a first curved segment 36b and a second curved segment 36c, made in a single body with the rectilinear segment 36a and in correspondence with its opposite ends. The first curved segment 36b and the second curved segment 36c have a substantially arched shape even if a rectilinear shape is not excluded, but located transversely to the rectilinear segment 36a.

In accordance with the form of embodiment in figs. 22, 23 and 24, the rectilinear segment 36a has its own longitudinal axis Z and the second curved segment 36c is rotated, or twisted, around the longitudinal axis Z by an angle α, with an amplitude comprised between 2° and 7°.

In other words, the rectilinear segment 36a and the first curved segment 36b lie on a common first lying plane, while the second curved segment 36c lies on a lying plane inclined by said angle α with respect to the first lying plane, and around the longitudinal axis Z.

This solution allows to close the staple 36 preventing the first curved segment 36b and the second curved segment 36c from overlapping each other, thus impeding an efficient closing action of the staple 36. Moreover, with this conformation of the staple 36, the rectilinear segment 36a also deforms due to the closing action, adapting and closing within it the wire or wires 29. One configuration of the staple 36 allows to obtain an efficient closing action of the wires 29 compared to known solutions.

In accordance with this solution, it can be provided that the jaws 38 are also installed angularly offset with respect to each other, that is, the gripping profile of the staple 36 of one of the jaws 38 is inclined by the angle α with respect to the gripping profile of the other jaw 38. This ensures that the gripping ends 38a and 38b can grip the staple 36 securely and in particular the first curved segment 36b and the second curved segment 36c.

The stapling device 35 can also comprise a gripping element 77 (fig. 21) of the staples 36 located in cooperation with the jaws 38 and configured to prevent them from falling.

A cutting device 50 (figs. 9, 10 and 17) is associated to the stapling device 35, configured to cut the wire 29 when the stapling has been done with a staple 36, as will be described in detail hereafter.

In accordance with one aspect of the present invention, the drive of the cutting device 50 can be determined by the movement of the drive element 73. In particular, it provides that the cutting device 50 is installed on the stapling device 35 and is configured to cut the wire 29 only after the jaws 38 have reached their closed position.

The cutting device 50 comprises a blade 51 disposed at one end of a rocker arm lever 52 pivoted on a pin 53 mounted in the end 21 of the arm 16. The opposite end of the lever 52 is connected to a rod 54 held constantly upward, that is, toward the slide 43, by a spring 55. A head 56 of the rod 54 is suitable to be engaged by the lower surface of the slide 43.

In the end 20 of the second arm 19 a clamping device 57 is mounted (figs. 7 and 8) configured to temporarily hold and selectively clamp the wire 29 in place in determinate steps of the operating method of the apparatus 10, as will be described in detail hereafter.

The clamping device 57 comprises a spike 58 pivoted on a pin 59 mounted in the end 20 of the second arm 19 and held constantly thrust in an anti-clockwise direction by a spring 60. The spike 58 can be actuated by a peg 61 free to slide axially in a hole of the end 20 of the second arm 19. When the latter is in an inactive position, the peg 61 protrudes with its end part with respect to the external surface of the end 20 of the second arm 19 (fig. 8), thrust by the same spring 60.

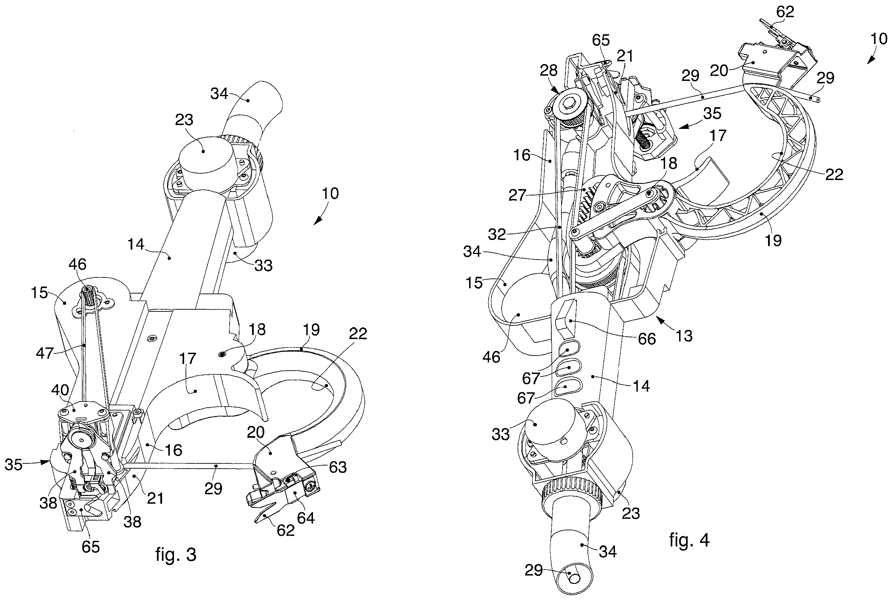

At the end 20 of the second arm 19 a foil 62 is also disposed (figs. 3, 4, 7 and 8), which has a V-shaped cavity to intercept and hold the wire 29 in position. The foil 62 is pivoted on a pin 63 mounted at the end 20 of the second arm 19 and is held constantly against a front surface of the latter by a spring 64. In a final operating position (fig. 18), which will be described hereafter, the foil 62 is suitable to rotate with respect to its pin 63.

Instead, at the end 21 of the first arm 16 a fixed foil 65 is disposed, which is also provided with a V-shaped cavity to intercept and hold the wire 29 in position.

There is a button 66 on the handle 14 (fig. 4), configured to individually command, for example with two different actuation positons, each of the three electric motors 23, 33 and 46, and there are also some warning lights 67. The electric feed cables of the three electric motors 23, 33 and 46 and the warning lights 67 are disposed inside the pipe 34 through which the wire 29 also passes.

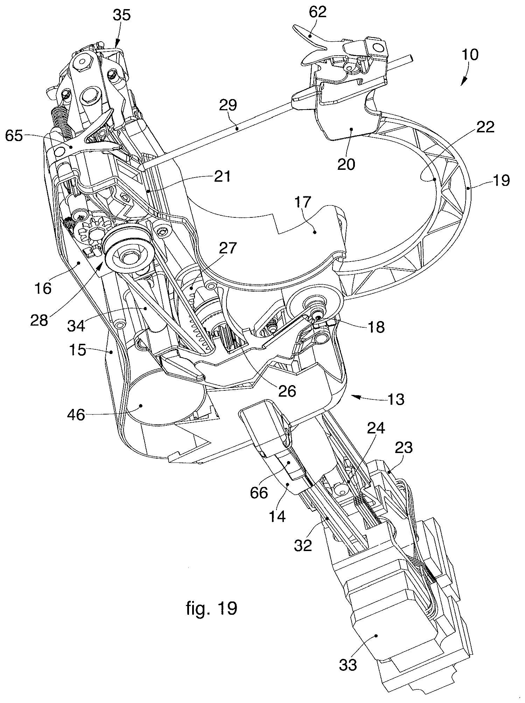

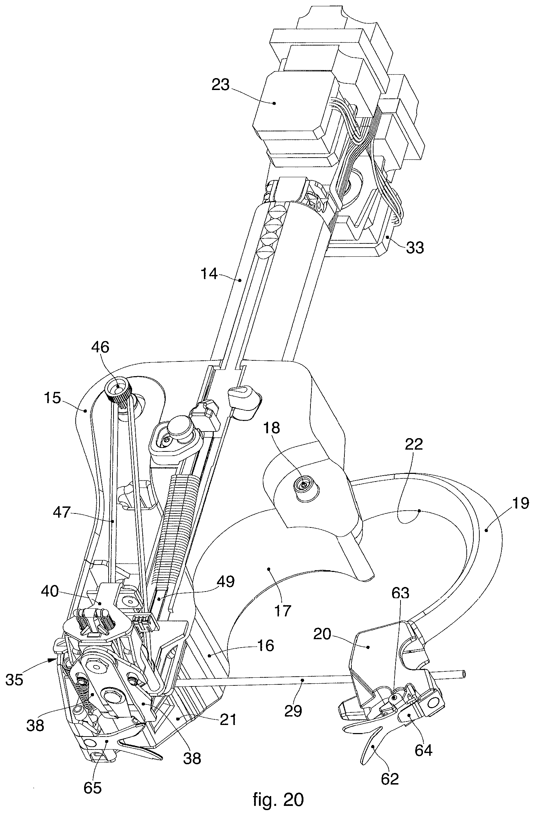

In accordance with the form of embodiment shown in figs. 19 and 20, the control and command devices of the three electric motors 23, 33 and 46 can also be associated at the end of the handle 14.

The control and command devices can be configured to program the consecutive drive of the electric motors 23, 33 and 46, according to timed programs to render the drive of the whole apparatus 10 completely automated.

The operating method of the apparatus 10 as described heretofore is as follows, and is shown with reference to figs. 11 to 18.

In a first operating step, the apparatus 10, which is in the inactive position, that is, with the end 20 of the second arm 19 distant from the corresponding end 21 of the first arm 16 (fig. 11), is thrust, manually for example, toward the two elements to be bound to each other 11 and 12, as indicated by the arrow A.

When the two elements to be bound to each other 11 and 12 are against the wall of the niche 17 (fig. 12), in a first operating step, the operator drives the button 66 (fig. 4), taking it, for example, from an initial position to a first actuation position, and thus commands the first electric motor 23, which makes the second arm 19 rotate in a clockwise direction (fig. 12) with respect to its pin 18 until the end 20 of the second arm 19 goes into contact with the corresponding end 21 of the first arm 16.

In this first operating position the peg 61 is thrust by the end 21 of the first arm 16 completely inside the end 20 of the second arm 19 and consequently, the spike 58 of the clamping device 57 is rotated in a clockwise direction.

When the first electric motor 23 has completed the rotation of the second arm 19, the second electric motor 33 is activated automatically, which makes the toothed roll 30 rotate in an anti-clockwise direction and the toothed roll 31 rotate in a clockwise direction (arrows B in fig. 12). In this way the wire 29, disposed between the two toothed rolls 30 and 31 is made to move forward freely, as indicated by the arrows C in fig. 12, until it passes beyond the clamping device 57 in the end 20 of the second arm 19.

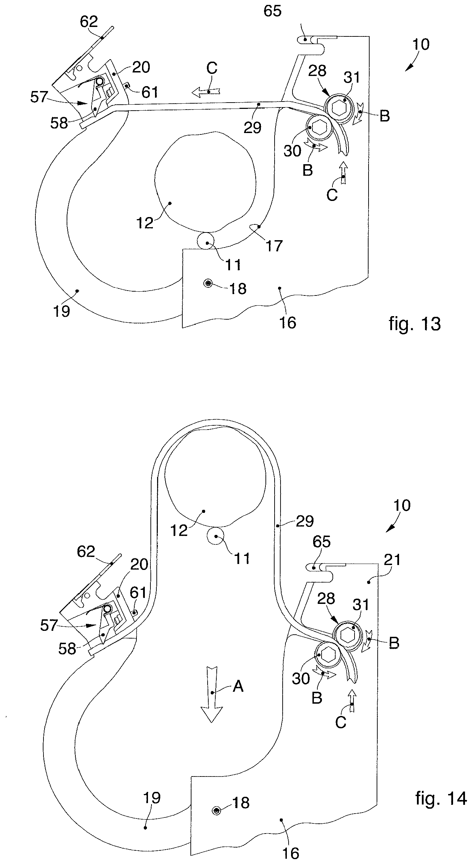

Then, in a second operating step, the first two electric motors 23 and 33 are activated automatically so that the second arm 19 moves to a second operating position that substantially coincides with its initial inactive position (fig. 13) and so that, at the same time, the toothed rolls 30 and 31 rotate one in an anti-clockwise direction and the other in a clockwise direction (arrows B in fig. 13), so that the wire 29, attached by the spike 58, can move together with the end 20 of the second arm 19 (arrows C in fig. 13). Alternatively, the first electric motor 23 can remain deactivated and the toothed rolls 30 and 31 can remain idle and free to rotate, drawn by the wire 29 pulled by the spike 58.

Subsequently, in a third operating step, the apparatus 10 is distanced, manually for example, from the two elements to be bound to each other 11 and 12 (arrow A in fig. 14), so that the wire 29 forms a loop around the elements 11 and 12.

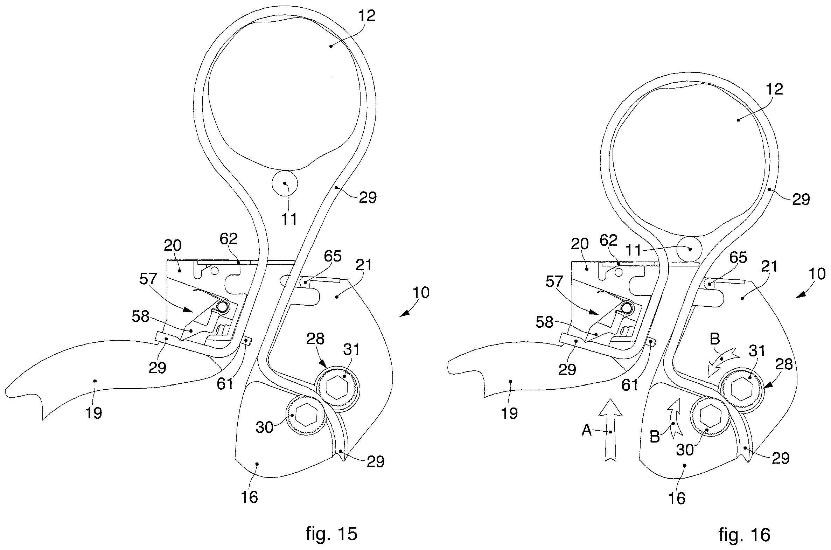

In a fourth operating step, by means of the button 66 (fig. 4) which for example is taken to a second actuation position, the first electric motor 23 is commanded so that it makes the second arm 19 rotate again in a clockwise direction (fig. 15) until the end 20 of the second arm 19 is near the corresponding end 21 of the first arm 16, without touching it, so as not to actuate the peg 61 and not release the spike 58. In this position the wire 29 is also guided inside the V-shaped cavities of the two foils 62 and 65.

In a fifth operating step the second electric motor 33 is automatically commanded so that it rotates in an opposite direction to the previous one, so that the toothed rolls 30 and 31 rotate respectively in a clockwise direction and in an anti-clockwise direction (arrows B in fig. 16) and recover the wire 29, until the ends 20 and 21 of the two arms 16 and 19 are in contact with one of the two elements to be bound to each other 11 and 12.

In a subsequent sixth operating step, the second arm 19 is brought completely near to the first arm 16 (fig. 17), so that their two ends 20 and 21 come into contact with each other and the peg 61 is thus driven, which frees the spike 58. In this third operating position (figs. 9 and 17) the segments of wire 29 that are between the two ends 20 and 21 are disposed in corresponding grooves made in the latter and do not interfere with the complete closure of the second arm 19.

When the sixth operating step is complete, in a subsequent seventh operating step the third electric motor 46 is automatically driven so that the wire 29 is stapled (fig. 17) and a staple 36 is inserted on the two heads of the wire 29, next to the two foils 62 and 65.

At the same time, in this fourth operating position (figs. 10 and 17), using the cutting device 50 (indicated by the symbol of scissors in fig. 17), the wire 29 is cut downstream of the feed device 28.

In particular, the drive of the third electric motor 46 causes the toothed pulley 48 and the worm screw 45 to rotate (figs. 9 and 10) and hence the slide 43 to lower and the pincers 37 to be driven and, by means of the rod 54, the lever 52 rotates and takes the blade 51 to cut the wire 29.

With a last operation, for example manual, the operator can move the apparatus 10 away from the two elements 11 and 12 that are already bound to each other by the wire 29 (fig. 18). So as not to obstruct the exit of the wire 29 and the corresponding staple 36 from the ends 20 and 21 of the two arms 19 and 16, the foil 62 is free to rotate with respect to its pin 63, against the action of the spring 64.

The two elements 11 and 12 have thus been completely bound using the apparatus 10, for example the portable type, according to the present invention.

It is clear that modifications and/or additions of parts or steps may be made to the apparatus 10 and corresponding method as described heretofore, without departing from the field and scope of the present invention.

For example, the apparatus 10 can have much bigger sizes and weight than those indicated above, and can be configured to be associated with a mechanical arm, for example connected to an agricultural machine, such as a tractor or other.

It is also clear that, although the present invention has been described with reference to a single specific example, a person of skill in the art shall certainly be able to achieve many other equivalent forms of apparatus and corresponding operating methods to automatically bind at least two elements to each other, having the characteristics as set forth in the claims and hence all coming within the field of protection defined thereby.

## Claims

1. Apparatus to automatically bind at least two elements (11, 12) to each other, comprising a first arm (16) in which a binding element (29) is disposed and a second arm (19), wherein at least one of said arms (16, 19) is mobile with respect to the other between an inactive position, in which two ends (20, 21) of said arms (16, 19) are distant from each other, and at least one operating position in which said two ends (20, 21) are in contact, or near, each other, wherein there is a feed device (28) on said first arm (16) configured to make said binding element (29) selectively advance at least as far as said end of said first arm (16), and wherein there is a clamping device (57) on said second arm (19) configured to temporarily and selectively clamp said binding element (29) at least when said arms (16, 19) are in said operating position, **characterized in that** a feed electric motor (33) is provided to command said feed device (28), **in that** an arm electric motor (23) is provided to selectively command the movement of at least one of said arms (16, 19) from said inactive position to said operating position, **in that** said apparatus comprises a stapling device (35) configured to affix a closing staple (36) around said binding element (29) after a ring has been formed with the latter around said two elements (11, 12) to be bound to each other, **in that** a stapler electric motor (46) is provided to command said stapling device (35), **and in that** said apparatus also comprises a handle (14) in which at least a push button (66) is mounted configured to selectively command each of said three electric motors (23, 33, 46).

2. Apparatus as in claim 1, **characterized in that** said first arm (16) is laterally provided with a niche with a substantially semi-circular shape and said second arm (19) has an arched shape to define, together with said niche (17), a cavity (22) configured to temporarily receive said two elements (11, 12) to be bound to each other.

3. Apparatus as in claim 1 or 2, **characterized in that** a cutting device (50) is associated to said stapling device (35) configured to cut said binding element (29) when said closing staple (36) of the ring formed around said two elements (11, 12) to be bound to each other is affixed on said binding element (29).

4. Apparatus as in any claim hereinbefore, **characterized in that** it has a length of less than 500 mm and an overall weight of about 1,000 grams, so that it is the portable type.

5. Method to automatically bind at least two elements (11, 12) to each other, using an apparatus (10) that comprises a first arm (16) in which a binding element (29) is disposed and a second arm (19), and wherein at least one of said arms (16, 19) is mobile with respect to the other between an inactive position, in which two ends (20, 21) of said arms (16, 19) are distant from each other, and at least one operating position in which said two ends (20, 21) are in contact, or near, each other, wherein it comprises a step in which a feed device (28) mounted on said first arm (16) is driven to make said binding element (29) selectively advance at least as far as said end of said first arm (16), and wherein in another step a clamping device (57) is driven to temporarily and selectively clamp said binding element (29) at least when said arms (16, 19) are in said operating position, **characterized in that** the feed of said binding element (29) is motorized by means of a feed electric motor (33) connected to said feed device (28), **in that** the method comprises the motorized movement of at least one of said two arms (16, 19) between said inactive position and said operating position, and vice versa, by means of an arm electric motor (23), **in that** the method comprises a stapling step to affix a closing staple (36) around said binding element (29) after a ring has been formed with the latter around said two elements to be bound to each other (11, 12), the stapling step being motorized with a stapler electric motor (46), **and in that** said three electric motors (23, 33, 46) are selectively commanded with at least a push button (66) mounted in an handle (14) of said apparatus (10).

## Patentansprüche

1. Vorrichtung zum automatischen Verbinden mindestens zweier Elemente (11, 12) miteinander, umfassend einen ersten Arm (16), in dem ein Verbindungselement (29) angeordnet ist, und einen zweiten Arm (19), wobei mindestens einer der Arme (16, 19) in Bezug auf den anderen zwischen einer inaktiven Position, in der zwei Enden (20, 21) der Arme (16, 19) im Abstand voneinander vorliegen, und mindestens einer Betriebsposition, in der die beiden Enden (20, 21) in Kontakt miteinander vorliegen oder einander nahe sind, beweglich ist, wobei eine Zufuhrvorrichtung (28) auf dem ersten Arm (16) vorliegt, die so konfiguriert ist, dass sie das Verbindungselement (29) selektiv zumindest bis zum Ende des ersten Arms (16) vorschiebt, und wobei eine Klemmvorrichtung (57) auf dem zweiten Arm (19) vorliegt, die so konfiguriert ist, dass sie temporär und selektiv das Verbindungselement (29) einklemmt, zumindest, wenn sich die Arme (16, 19) in der Betriebsposition befinden, **dadurch gekennzeichnet, dass** ein Zufuhr-Elektromotor (33) vorgesehen ist, um die Zufuhrvorrichtung (28) zu steuern, dass ein Arm-Elektromotor (23) vorgesehen ist, um selektiv die Bewegung mindestens eines der Arme (16, 19) von der inaktiven Position in die Betriebsposition zu steuern, dass die Vorrichtung eine Klammervorrichtung (35) umfasst, die so konfiguriert ist, dass sie eine Verschlussklammer (36) um das Verbindungselement (29) herum befestigt, nachdem ein Ring mit diesem um die beiden Elemente (11, 12) herum gebildet wurde, um diese miteinander zu verbinden, dass ein Klammer-Elektromotor (46) vorgesehen ist, um die Klammervorrichtung (35) zu steuern, und dass die Vorrichtung außerdem einen Handgriff (14) umfasst, in dem mindestens eine Drucktaste (66) angebracht ist, die so konfiguriert ist, dass sie jeden der drei Elektromotoren (23, 33, 46) selektiv steuert.

2. Vorrichtung gemäß Anspruch 1, **dadurch gekennzeichnet, dass** der erste Arm (16) lateral mit einer Auskehlung mit im Wesentlichen halbkreisförmiger Form versehen ist und der zweite Arm (19) eine Bogenform aufweist, um zusammen mit der Auskehlung (17) einen Hohlraum (22) zu definieren, der so konfiguriert ist, dass er temporär die beiden miteinander zu verbindenden Elemente (11, 12) aufnimmt.

3. Vorrichtung gemäß Anspruch 1 oder 2, **dadurch gekennzeichnet, dass** eine Schneidvorrichtung (50) mit der Klammervorrichtung (35) verbunden und so konfiguriert ist, dass sie das Verbindungselement (29) schneidet, wenn die Verschlussklammer (36) des um die beiden miteinander zu verbindenden Elemente (11, 12) herum gebildeten Rings an dem Verbindungselement (29) befestigt ist.

4. Vorrichtung gemäß irgendeinem der vorhergehenden Ansprüche, **dadurch gekennzeichnet, dass** sie eine Länge von weniger als 500 mm und ein Gesamtgewicht von etwa 1000 Gramm aufweist, so dass sie vom tragbaren Typ ist.

5. Verfahren zum automatischen Verbinden mindestens zweier Elemente (11, 12) miteinander unter Verwendung einer Vorrichtung (10), die einen ersten Arm (16), in dem ein Verbindungselement (29) angeordnet ist, und einen zweiten Arm (19) umfasst, wobei mindestens einer der Arme (16, 19) in Bezug auf den anderen zwischen einer inaktiven Position, in der zwei Enden (20, 21) der Arme (16, 19) im Abstand voneinander vorliegen, und mindestens einer Betriebsposition, in der die beiden Enden (20, 21) in Kontakt miteinander vorliegen oder einander nahe sind, beweglich ist, wobei das Verfahren einen Schritt umfasst, in dem eine an dem ersten Arm (16) angebrachte Zufuhrvorrichtung (28) so gesteuert wird, dass das Verbindungselement (29) selektiv mindestens bis zum Ende des ersten Arms (16) vorgeschoben wird, und wobei in einem weiteren Schritt eine Klemmvorrichtung (57) so gesteuert wird, dass sie das Verbindungselement (29) temporär und selektiv einklemmt, zumindest, wenn die Arme (16, 19) in der Betriebsposition sind, **dadurch gekennzeichnet, dass** die Zufuhr des Verbindungselements (29) mittels eines mit der Zufuhrvorrichtung (28) verbundenen Zufuhr-Elektromotors (33) motorisiert ist, dass das Verfahren die motorisierte Bewegung mindestens eines der beiden Arme (16, 19) zwischen einer inaktiven Position und der Betriebsposition und umgekehrt mittels eines Arm-Elektromotors (23) umfasst, dass das Verfahren einen Klammerschritt umfasst, um eine Verschlussklammer (36) um das Verbindungselement (29) herum zu befestigen, nachdem ein Ring mit diesem um die beiden zu verbindenden Elemente (11, 12) herum gebildet wurde, wobei der Klammerschritt mit einem Klammer-Elektromotor (46) motorisiert ist, und dass die drei Elektromotoren (23, 33, 46) selektiv mit mindestens einer an einem Handgriff (14) der Vorrichtung (10) angebrachten Drucktaste (66) gesteuert werden.

## Revendications

1. Appareil pour lier automatiquement au moins deux éléments (11, 12) l'un à l'autre, comprenant un premier bras (16) dans lequel est disposé un élément de liaison (29) et un second bras (19), dans lequel au moins desdits bras (16, 19) est mobile par rapport à l'autre entre une position inactive, dans laquelle deux extrémités (20, 21) desdits bras (16, 19) sont distantes l'une de l'autre, et au moins une position de fonctionnement dans laquelle lesdites deux extrémités (20, 21) sont en contact ou proches l'une de l'autre, dans lequel un dispositif d'alimentation (28) est sur ledit premier bras (16) et configuré pour faire avancer ledit élément de liaison (29) au moins aussi loin que ladite extrémité dudit premier bras (16), et dans lequel il y a un dispositif de serrage (57) sur ledit second bras (19), configuré pour serrer temporairement et sélectivement ledit élément de liaison (29) au moins lorsque lesdits bras (16, 19) se trouvent dans ladite position de fonctionnement, **caractérisée en ce qu'**un moteur électrique d'alimentation (33) est prévu pour commander ledit dispositif d'alimentation (28), **en ce qu'**un moteur électrique de bras (23) est prévu pour commander de manière sélective le déplacement d'au moins l'un desdits bras (16, 19) de ladite position inactive à ladite position de fonctionnement, **en ce que** ledit appareil comprend un dispositif d'agrafage (35) configuré pour fixer une agrafe de fermeture (36) autour dudit élément de liaison (29) après la formation d'une bague avec cette dernière autour desdits deux éléments (11, 12) à lier l'un à l'autre, **en ce qu'**un moteur électrique de dispositif d'agrafage (46) est prévu pour commander ledit dispositif d'agrafage (35), et **en ce que** ledit appareil comprend également une poignée (14) dans laquelle est monté au moins un bouton poussoir (66) configuré pour commander sélectivement chacun desdits trois moteurs électriques (23, 33, 46).

2. Appareil selon la revendication 1, **caractérisé en ce que** ledit premier bras (16) est pourvu latéralement d'une niche de forme sensiblement semi-circulaire, et **en ce que** ledit second bras (19) a une forme arquée pour définir, conjointement avec ladite niche (17), une cavité (22) configurée pour recevoir temporairement lesdits deux éléments (11, 12) à lier l'un à l'autre.

3. Appareil selon la revendication 1 ou 2, **caractérisé en ce qu'**un dispositif de découpe (50) est associé audit dispositif d'agrafage (35), configuré pour découper ledit élément de liaison (29) lorsque ladite agrafe de fermeture (36) de la bague formée autour desdits deux éléments (11, 12) à lier l'un à l'autre est fixée sur ledit élément de liaison (29).

4. Appareil selon l'une quelconque des revendications précédentes, **caractérisé en ce qu'**il a une longueur inférieure à 500 mm et un poids total d'environ 1 000 grammes, de sorte qu'il est du type portable.

5. Méthode de liaison automatique d'au moins deux éléments (11, 12) l'un à l'autre, au moyen d'un appareil (10) comprenant un premier bras (16) dans lequel un élément de liaison (29) est disposé et un second bras (19), et dans lequel au moins l'un desdits bras (16, 19) est mobile par rapport à l'autre entre une position inactive, dans laquelle deux extrémités (20, 21) desdits bras (16, 19) sont distantes l'une de l'autre, et au moins une position de fonctionnement dans laquelle lesdites deux extrémités (20, 21) sont en contact ou proches l'une de l'autre, dans laquelle elle comprend une étape dans laquelle un dispositif d'alimentation (28) monté sur ledit premier bras (16) est entraîné pour faire avancer ledit élément de liaison (29) sélectivement au moins aussi loin que ladite extrémité dudit premier bras (16), et dans laquelle, dans une autre étape, un dispositif de serrage (57) est entraîné pour serrer de manière temporaire et sélective ledit élément de liaison (29) au moins lorsque lesdits bras (16, 19) sont dans ladite position de fonctionnement, **caractérisée en ce que** l'alimentation dudit élément de liaison (29) est motorisée au moyen d'un moteur électrique d'alimentation (33) connecté audit dispositif d'alimentation (28), **en ce que** la méthode comprend le déplacement motorisé d'au moins un desdits deux bras (16, 19) entre ladite position inactive et ladite position de fonctionnement, et inversement, au moyen d'un moteur électrique de bras (23), **en ce que** la méthode comprend une étape d'agrafage pour fixer une agrafe de fermeture (36) autour dudit élément de liaison (29) après la formation d'une bague avec cette dernière autour desdits deux éléments à lier l'un à l'autre (11, 12), l'étape d'agrafage étant motorisée avec un moteur électrique de dispositif, d'agrafage (46), et **en ce que** lesdits trois moteurs électriques (23, 33, 46) sont commandés sélectivement avec au moins un bouton poussoir (66) monté dans une poignée (14) dudit appareil (10).
